(19) Europäisches Patentamt
European Patent Office
Office européen des brevets

(11) **EP 2 390 800 A1**

(12) **EUROPEAN PATENT APPLICATION**

(43) Date of publication:
**30.11.2011 Bulletin 2011/48**

(51) Int Cl.:
***G06F 17/50*** (2006.01)

(21) Application number: **11166530.3**

(22) Date of filing: **18.05.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.05.2010 US 789378**

(71) Applicant: **Livermore Software Technology Corporation**
**Livermore CA 94551 (US)**

(72) Inventors:
• **Xinhai, Zhu**
  **Livermore CA 94551 (US)**
• **Li, Zhang**
  **Livermore CA 94551 (US)**

(74) Representative: **Becker Kurig Straus**
**Patentanwälte**
**Bavariastrasse 7**
**80336 München (DE)**

(54) **Sheet metal forming failure prediction using numerical simulations**

(57)    Systems and methods of predicting sheet metal forming failure using numerical simulations (e.g., finite element analysis) are disclosed. A FEA model is defined for a particular sheet metal forming process. Blank sheet metal is modeled with a plurality of shell elements. Additionally, a deformation path-dependent forming limit diagram (FLD) is converted to a path-independent FLD. A time-marching simulation of the sheet metal forming process is conducted using the FEA model. At each solution cycle, equivalent strain at each integration point of shell element is checked against the corresponding forming limit strain value of the path-independent FLD. The ratio of the equivalent strain and the forming limit strain is defined as formability index. A time history of the formability index of each shell element is saved into a file and displayed to a monitor upon user's instructions. When a particular element's formability index reaches one or higher, a localized necking is predicted.

FIG. 2

**Description**

**FIELD OF THE INVENTION**

The present invention generally relates to computer aided engineering analysis, more particularly to predict sheet metal forming failure using numerical simulation with finite element analysis (FEA).

**BACKGROUND OF THE INVENTION**

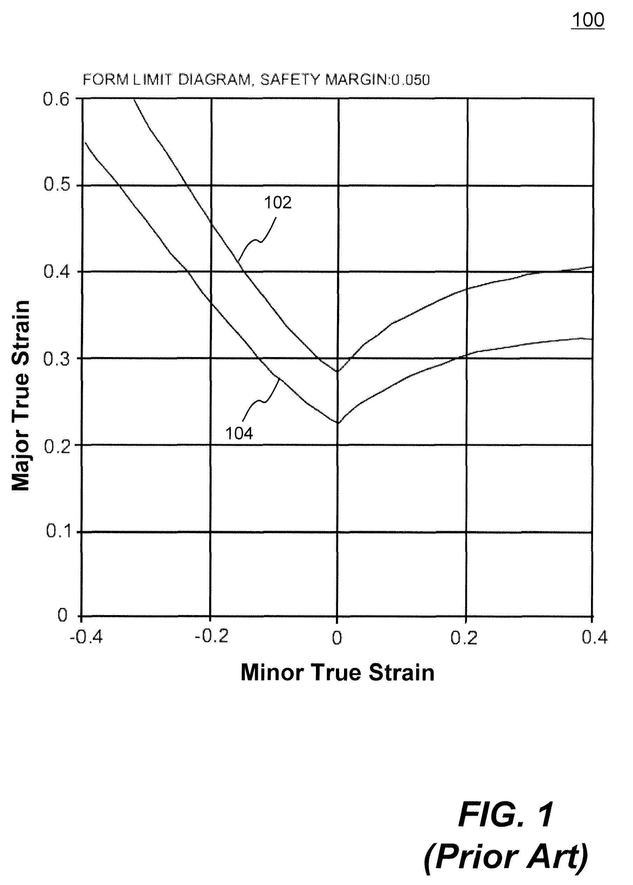

Many of metal parts are manufactured via sheet metal forming. One of the most used sheet metal forming processes is deep drawing, which involves a hydraulic or mechanical press pushing a specially-shaped punch into a matching die with a piece of blank sheet metal in between. Exemplary products made from this process include, but are not limited to, car hood, fender, door, automotive fuel tank, kitchen sink, aluminum can, etc. In deep drawing, the depth of a part being made is generally more than half its diameter. As a result, the blank is stretched and therefore thinning in various locations due to the geometry of the part. The part is only good when there is no structural defect such as material failure (e.g., cracking, tearing, wrinkling, necking, etc.).
Localized necking failure is referred to as excessive thinning of the blank sheet metal. Localized necking generally causes by stretching the sheet metal beyond its elastic limit or yield. Localized necking would eventually result into tearing and/or fracture. To correct the problem, the shape of the forming tool (i.e., die, punch) needs to be modified, which is costly due to production time delay and physical costs. Therefore, a computer aided engineering analysis (e.g., finite element analysis) is used for simulating sheet metal forming process to predict whether a failure such as localized necking would occur. Traditionally, a Forming Limit Diagrams (FLD) has been used for determining such occurrence, for example, FLD shown in FIG. 1. In FLD, a single Forming Limit Curve (FLC) 102 of in-plane limit major strain versus minor strain is served as the forming limit criterion, beyond which the sheet metal is deemed to start localization (e.g., localized necking). However, there are problems related to using traditional FLD. First, FLD is created assuming a linear deformation path in a material specimen of the sheet metal. In deep drawing under complex loading conditions, deformation paths can deviate significantly from linearity. As a result, some of the physical material failures are not predicted (i.e., physical part shows failure while the numerical simulation does not). Furthermore, in multi-stage forming processes, such as drawing followed by flanging, the loading direction will inevitably change. In order to accurately predict necking failure, a set of FLCs corresponding to various strain path conditions in forming of the part must be provided in a simulation, which is not practical at all. So the prior art approach has been to add a safe margin (shown as a lower line 104 of FIG. 1) to the original FLC. However, this approach may unnecessarily limit the design space as the safe margin line is much lower than the original FLC.
Therefore, it would be desirable to have a more reliable approach to predict sheet metal forming failure using numerical simulations with finite element analysis.

**SUMMARY OF THE INVENTION**

This section is for the purpose of summarizing some aspects of the present invention and to briefly introduce some preferred embodiments. Simplifications or omissions in this section as well as in the abstract and the title herein may be made to avoid obscuring the purpose of the section. Such simplifications or omissions are not intended to limit the scope of the present invention.
Systems and methods of predicting sheet metal forming failure using numerical simulations (e.g., finite element analysis (FEA)) are disclosed. According to one aspect of the invention, a finite element analysis model is defined for a particular sheet metal forming process. The FEA model includes a plurality of nodes and elements representing geometry of punch, die and blank sheet metal. The blank sheet metal is modeled with a plurality of shell elements. Additionally, a deformation path-dependent forming limit diagram (FLD) for the material of the blank is included. The deformation path-dependent FLD is converted to a path-independent FLD. A time-marching simulation of the sheet metal forming process is conducted using the FEA model. At each solution cycle, equivalent strain at each integration point of shell element is checked against the corresponding forming limit strain value of the path-independent FLD. The ratio of the equivalent strain and the forming limit strain is defined as formability index. A time history of the formability index of each shell element is saved into a file and displayed to a monitor upon user's instructions. When a particular element's formability index reaches one or higher, a localized necking is predicted.
One of the objects of the present invention is to provide an easy to use and observe means that indicates whether a necking failure might occur based on structural responses obtained a numerical simulation.
Other objects, features, and advantages of the present invention will become apparent upon examining the following detailed description of an embodiment thereof, taken in conjunction with the attached drawings.

**BRIEF DESCRIPTION OF THE DRAWINGS**

These and other features, aspects, and advantages of the present invention will be better understood with regard to the following description, appended claims, and accompanying drawings as follows:

FIG. 1 shows an exemplary traditional forming limit diagram (FLD), which is load path dependent;

FIG. 2 shows an exemplary path-independent FLD in accordance with one embodiment of the present invention;

FIG. 3A is a diagram showing an exemplary coordinate system for strain and strain components;

FIG. 3B is a diagram showing exemplary shell elements having different number of integration points;

FIG. 4A is a diagram showing strain history of two locations in an exemplary part on a traditional path-dependent FLD;

FIG. 4B is a diagram showing formability index history, according to an embodiment of the present invention, of the two locations shown in FIG. 4A;

FIG. 5 is a flowchart illustrating an exemplary process of predicting material failure in a time-marching simulation of metal forming process, according to an embodiment of the present invention; and

FIG. 6 is a function block diagram showing salient components of an exemplary computer, in which one embodiment of the present invention may be implemented.

**DETAILED DESCRIPTION**

Embodiments of the present invention are discussed herein with reference to FIGS. 1-6. However, those skilled in the art will readily appreciate that the detailed description given herein with respect to these figures is for explanatory purposes as the invention extends beyond these limited embodiments.

Methods and systems of predicting material failure (e.g., onset of localized necking) in a sheet forming process are disclosed. A time-marching simulation using a finite element analysis model is performed. The finite element analysis model comprises a plurality of shell elements representing the blank sheet metal being formed to a desired part. In order to perform such prediction using a finite element analysis in a computer system, a traditional strain path-dependent forming limit diagram (FLD) is converted into a path-independent FLD. Then formability index of each shell element is compiled into a time history from the time-marching simulation. When any of the formability indices is equal to one or over, it indicates a likely necking failure of the sheet metal.

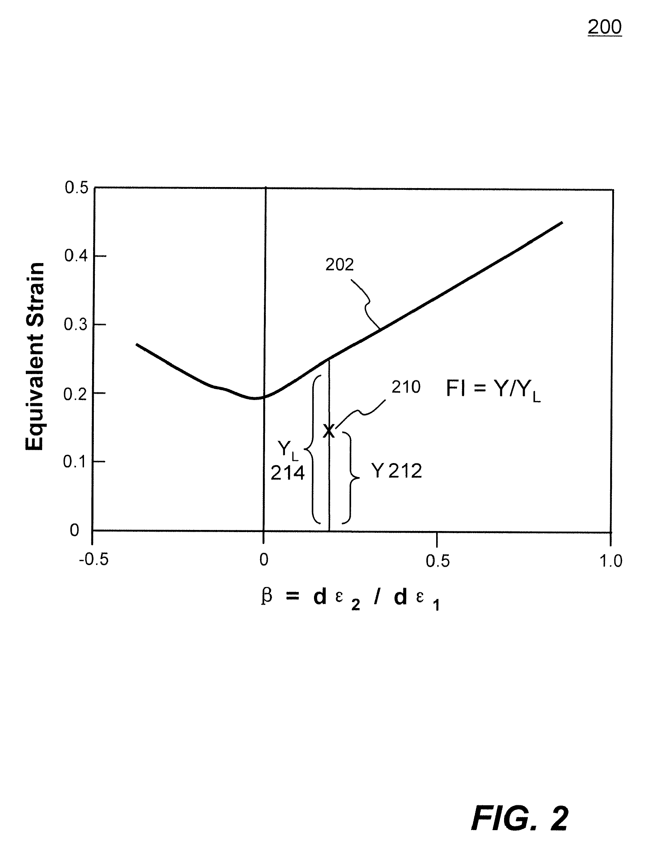

The path-independent FLD defines forming limit strain based on equivalent plastic strain $\bar{\varepsilon}^{eq}$ (which is related to the yield surface size or effective stress $\bar{\sigma}_e$). Such criterion results into a curve in a plot of the size of yield surface versus the current direction of plastic flow as shown in FIG. 2. The current flow direction $\beta$ (or current strain ratio) is defined as the ratio of current minor strain over major strain as follows: $\beta = \dfrac{d\varepsilon_2}{d\varepsilon_1}$, where $\varepsilon_1$ is major strain, while $\varepsilon_2$ is minor strain.

It can be shown that $\beta$ is uniquely related to the minor over major stress ratio ($\sigma_2 / \sigma_1$) for associated flow rule with a homogeneous yield surface function. In most general term the equivalent strain can be expressed as $\bar{\varepsilon}^{eq} = f(\beta,$ Material Properties).

For a material obeying the power law hardening $\sigma'' = K\varepsilon^n$, which leads to $\bar{\varepsilon}^{eq} = f(\beta, K, n, r)$, where "r" is Lankford parameter for yield surface. Using Hill's planar - anisotropic yield criterion (i.e., a special case under planar isotropic condition), the equivalent strain is expressed as follows:

$$\bar{\varepsilon}^{eq} = \frac{1+r}{\sqrt{1+2r}} \sqrt{\varepsilon_{major}^2 + \varepsilon_{minor}^2 + \frac{2r}{1+r}\varepsilon_{major}\varepsilon_{minor}} \qquad (1)$$

It is noted that Equation (1) depends upon yield surface type. The special planar isotropic case, sometimes, is denoted as a R00=R45=R90 case. For more advanced or different yield surfaces, equivalent strain is obtained using a general relationship as follows:

$$\bar{\varepsilon}^{eq} = (\sigma_{11}\varepsilon_{11} + \sigma_{22}\varepsilon_{22} + \sigma_{33}\varepsilon_{33} + \sigma_{12}\varepsilon_{12} + \sigma_{13}\varepsilon_{13} + \sigma_{23}\varepsilon_{23}) / \bar{\sigma}_e \qquad (2)$$

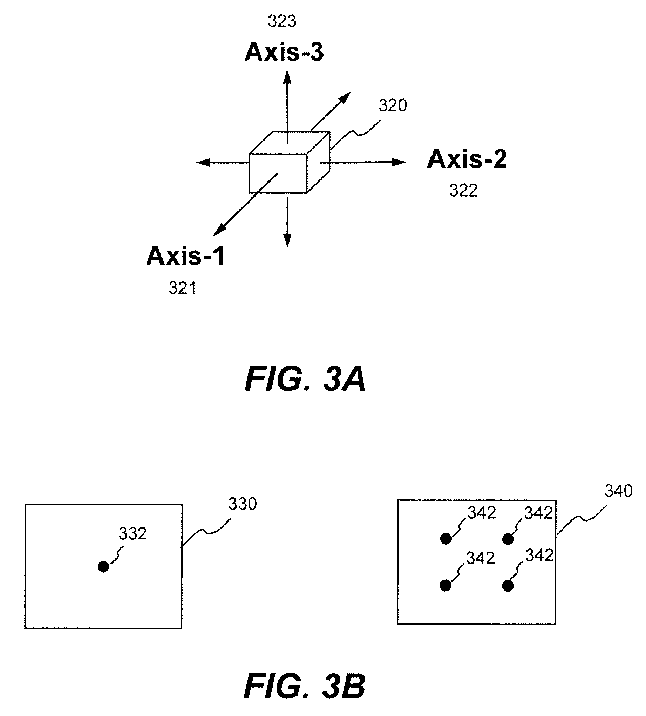

where $\overline{\sigma_e}$, is effective stress (e.g., axial stress in a uniaxial tension test), $\sigma_{ij}$ are stress components and $\varepsilon_{ij}$, are strain components (i, j=1,2,3). Equation (2) is a general relationship in three-dimensional space and can be applied to any given point on the blank sheet metal. An exemplary coordinate system in FIG. 3A for stress and strain components is shown with an infinitesimal 320 (e.g., any given point on a blank sheet metal) having Axis-1 321, Axis-2 322 and Axis-3 323 (i.e., corresponds to i, j= 1, 2 or 3).

FIG. 2 shows an exemplary path-independent FLD 200, while an exemplary traditional path-dependent FLD 100 is shown in FIG. 1. It is noted that the FLD is material specific. In other words, each different material has its own FLD (e.g., high strength steel, mild steel, aluminum, etc.). And conversion of path-dependent FLD can be converted into path-independent FLD using Equation (1).

Traditional path-dependent FLD 100 comprises a forming limit curve 102, with a critical combination of major $\varepsilon_{major}$ and minor strains $\varepsilon_{minor}$ at the onset of necking failure for a specific load path. In order to cover various possible non-linear load paths, a safety margin is added to the forming limit curve to form the lower curve 104. Theoretically, all strain combinations below the lower curve 104 do not cause any material failure. Traditionally, strains obtained in a computer simulation of metal forming are checked against the path-dependent FLD 100. As long as the strains are below the lower curve 104, the sheet metal forming process is supposed to be working. However, due to non-linear load paths, even with safety margin, there exist many incidences of real world failure even the computer simulation indicates otherwise. It is noted that the term "strain" used in this document is true strain whether major, minor or equivalent. True strain is the correct measure of the final strain when deformation takes place in a series of increments, taking into account the influence of the strain path.

Usage of path-independent FLD 200 is similar to that of the path-dependent FLD 100. As long as the equivalent strain of any point on the surface of the sheet metal being formed to a specific part is below forming limit curve 202, the specific part can be formed without encountering material failure. In order to easily identify any point on the surface is within the forming limit, a formability index (FI) is calculated. As an example, formability index is a ratio of equivalent strain Y 212 at point 210 to the corresponding forming limit strain $Y_L$ 214. That is FI = $Y/Y_L$. For any given point on the surface of the sheet metal, a time history of the formability index is compiled from the time-marching simulation. According to one embodiment of the present invention, any formability index equal to or greater than one indicates potential real world necking failure.

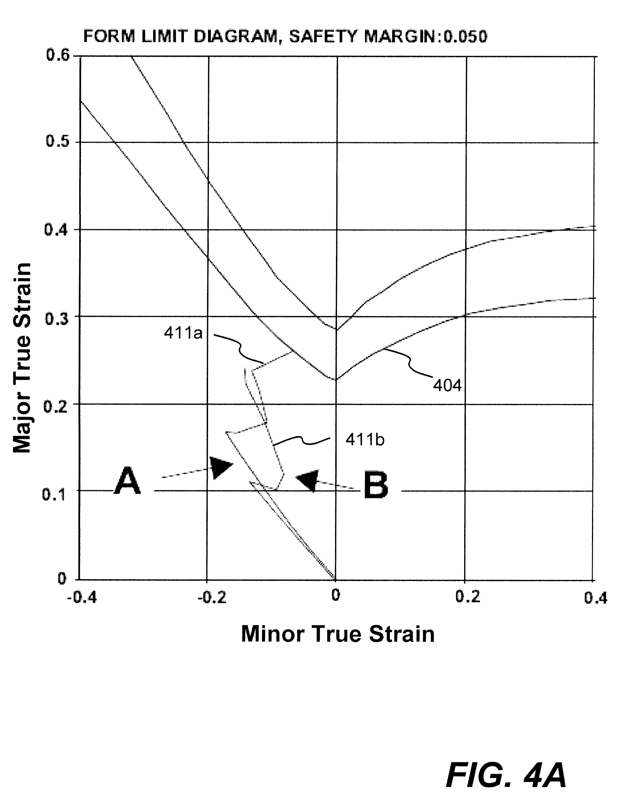

To demonstrate an advantage of the present invention, FIGS. 4A-4B show a real world sheet metal forming results on path-dependent and path-independent FLDs, respectively. FIG. 4A shows time histories 411a-b of major/minor strains of locations A and B of a part during sheet metal forming process. The entire time history 411 b of location B is below forming limit with safety margin curve 404, while time history 411 a of location A touches the forming limit curve 404 at the end. According to these results, only location A may experience the onset of necking failure at the end, and location B is problem free. However in reality, both locations experience failures.

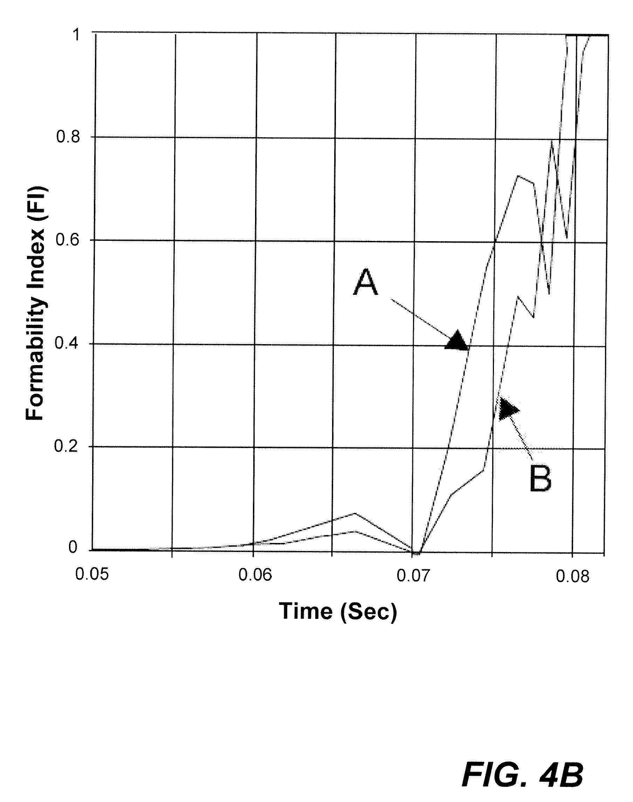

While the traditional FLD does not provide good prediction, the formability index derived from path-independent FLD does. FIG. 4B shows formability index time histories of locations A and B. Due to non-linear deformation path during the forming process, both locations A and B show respective formability indices equal to one towards the end. In other words, necking failure is predicted at location B using the formability index approach in accordance with one embodiment of the present invention. However, there is no indication of failure whatsoever, when using the traditional path-dependent FLD.

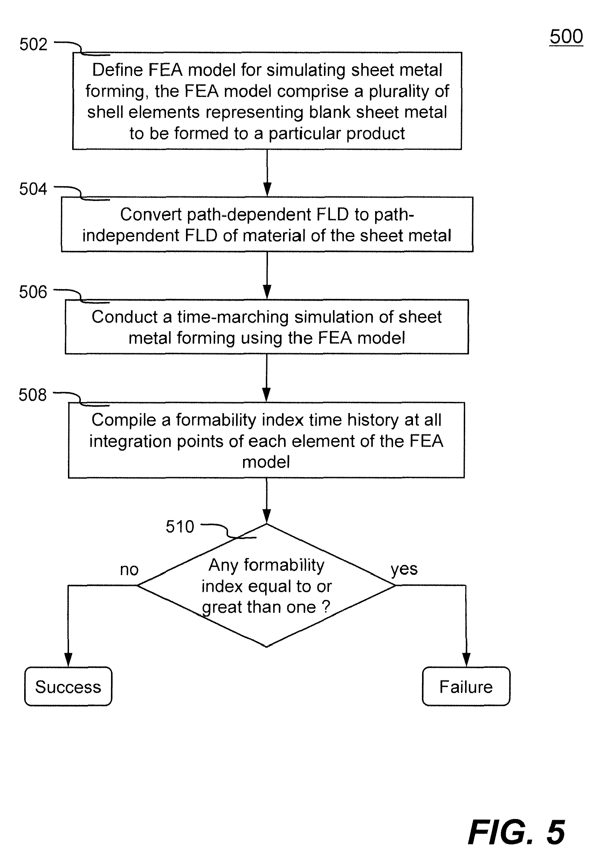

Referring now to FIG. 5, it is shown a flowchart illustrating an exemplary process 500 of predicting material failure in a time-marching simulation of sheet metal forming process, according to one embodiment of the present invention. Process 500 is preferably implemented in software.

Process 500 starts by defining a finite element analysis (FEA) model used for simulating a metal forming process at step 502. The model includes rigid punch and die and flexible or formable blank sheet metal. The blank sheet metal is represented by a plurality of shell elements to be formed to a desired part. A traditional path-dependent forming limit diagram (FLD) for the material of the blank sheet metal is also included in the definition. Next, at step 504, path-dependent FLD is converted to a path-independent FLD. The conversion can be performed using Equation (1) above in accordance with one embodiment of the present invention. Then at step 506, a time-marching simulation of sheet metal forming is conducted using the FEM model. FEA is used for obtaining stress/strain history of the FEA model (i.e., each and every shell l element for the entire forming process). Accordingly, formability index time history of every shell element is compiled at step 508. Formability index history is checked at decision 510. Any index value is equal to or greater than one is deemed to be a failure or at the onset of failure.

Generally, the centroid 332 of each shell element 330 is checked for single integration point element shown in FIG. 3B. However, the present invention allows using of higher order element 340, for example, four (4) Gaussian integration points 342 per element. Single integration point element is referred to as under-integrated element, while the higher order element is referred to as fully integrated element. In order to determine a status of an element, all Gaussian integration points of the element are examined, an element is determined to be failed when all integration points of the element have formability index equal to or greater than one.

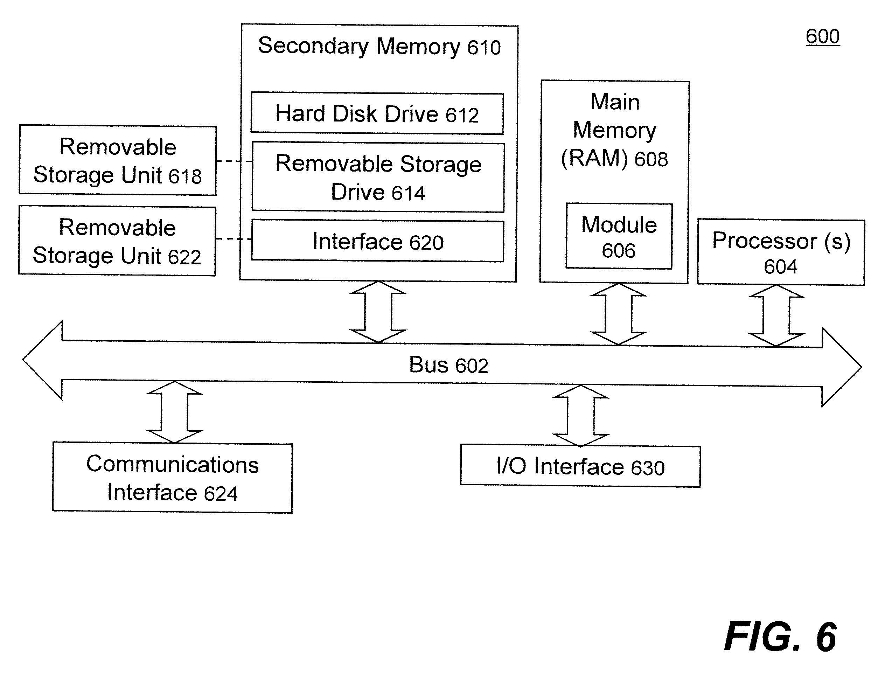

According to one aspect, the present invention is directed towards one or more computer systems capable of carrying out the functionality described herein. An example of a computer system 600 is shown in FIG. 6. The computer system 600 includes one or more processors, such as processor 604. The processor 604 is connected to a computer system internal communication bus 602. Various software embodiments are described in terms of this exemplary computer system. After reading this description, it will become apparent to a person skilled in the relevant art(s) how to implement the invention using other computer systems and/or computer architectures.

Computer system 600 also includes a main memory 608, preferably random access memory (RAM), and may also include a secondary memory 610. The secondary memory 610 may include, for example, one or more hard disk drives 612 and/or one or more removable storage drives 614, representing a floppy disk drive, a magnetic tape drive, an optical disk drive, etc. The removable storage drive 614 reads from and/or writes to a removable storage unit 618 in a well-known manner. Removable storage unit 618, represents a floppy disk, magnetic tape, optical disk, etc. which is read by and written to by removable storage drive 614. As will be appreciated, the removable storage unit 618 includes a computer usable storage medium having stored therein computer software and/or data.

In alternative embodiments, secondary memory 610 may include other similar means for allowing computer programs or other instructions to be loaded into computer system 600. Such means may include, for example, a removable storage unit 622 and an interface 620. Examples of such may include a program cartridge and cartridge interface (such as that found in video game devices), a removable memory chip (such as an Erasable Programmable Read-Only Memory (EPROM), Universal Serial Bus (USB) flash memory, or PROM) and associated socket, and other removable storage units 622 and interfaces 620 which allow software and data to be transferred from the removable storage unit 622 to computer system 600. In general, Computer system 600 is controlled and coordinated by operating system (OS) software, which performs tasks such as process scheduling, memory management, networking and I/O services.

There may also be a communications interface 624 connecting to the bus 602. Communications interface 624 allows software and data to be transferred between computer system 600 and external devices. Examples of communications interface 624 may include a modem, a network interface (such as an Ethernet card), a communications port, a Personal Computer Memory Card International Association (PCMCIA) slot and card, etc. Software and data transferred via communications interface 624. The computer 600 communicates with other computing devices over a data network based on a special set of rules (i.e., a protocol). One of the common protocols is TCP/IP (Transmission Control Protocol/Internet Protocol) commonly used in the Internet. In general, the communication interface 624 manages the assembling of a data file into smaller packets that are transmitted over the data network or reassembles received packets into the original data file. In addition, the communication interface 624 handles the address part of each packet so that it gets to the right destination or intercepts packets destined for the computer 600.In this document, the terms "computer program medium", "computer readable medium", "computer recordable medium" and "computer usable medium" are used to generally refer to media such as removable storage drive 614 (e.g., flash storage drive), and/or a hard disk installed in hard disk drive 612. These computer program products are means for providing software to computer system 600. The invention is directed to such computer program products.

The computer system 600 may also include an input/output (I/O) interface 630, which provides the computer system 600 to access monitor, keyboard, mouse, printer, scanner, plotter, and the likes.

Computer programs (also called computer control logic) are stored as application modules 606 in main memory 608 and/or secondary memory 610. Computer programs may also be received via communications interface 624. Such computer programs, when executed, enable the computer system 600 to perform the features of the present invention as discussed herein. In particular, the computer programs, when executed, enable the processor 604 to perform features of the present invention. Accordingly, such computer programs represent controllers of the computer system 600.

In an embodiment where the invention is implemented using software, the software may be stored in a computer program product and loaded into computer system 600 using removable storage drive 614, hard drive 612, or communications interface 624. The application module 606, when executed by the processor 604, causes the processor 604 to perform the functions of the invention as described herein.

The main memory 608 may be loaded with one or more application modules 606 (e.g., FEM and/or SPH application module) that can be executed by one or more processors 604 with or without a user input through the I/O interface 630 to achieve desired tasks. In operation, when at least one processor 604 executes one of the application modules 606, the results are computed and stored in the secondary memory 610 (i.e., hard disk drive 612). Results of the analysis (e.g., formability index time histories) are reported to the user via the I/O interface 630 either in a text or in a graphical representation upon user's instructions.

Although the present invention has been described with reference to specific embodiments thereof, these embodiments are merely illustrative, and not restrictive of, the present invention. Various modifications or changes to the specifically disclosed exemplary embodiments will be suggested to persons skilled in the art. For example, whereas Hill's yield surface has been shown and described to derive Equation (1) through which a path-dependent FLD is converted to path-independent FLD. Other equivalent methods can be used instead, for example, a general relationship between equivalent strain and effective stress. Additionally, whereas quadrilateral shell elements have been shown and described to represent the FEA model, other types of elements can be used instead, for example, triangular elements. In summary, the scope of the invention should not be restricted to the specific exemplary embodiments disclosed herein, and all modifications that are readily suggested to those of ordinary skill in the art should be included within the spirit and purview of this application and scope of the appended claims.

**Claims**

1. A method executed in a computer system for predicting failure in a time-marching simulation of sheet metal forming process comprising:

   defining, by an application module installed in a computer system, a finite element analysis (FEA) model including a plurality of shell elements representing a blank sheet metal to be formed into a desired part;
   converting, by said application module, a path-dependent forming limit diagram (FLD) for the blank sheet metal to a path-independent FLD;
   obtaining, by said application module, said shell elements' equivalent strain and corresponding strain ratio by conducting the time-marching simulation, in a computer system, of entire sheet metal forming process of forming the blank sheet metal to the desired part;
   compiling, by said application module, a forming index time history of said each shell element's integration point using the equivalent strain and corresponding forming limit strain value at instant deformation flow direction, wherein said each element contains at least one integration point; and
   determining, by said application module, a status of the metal forming process, the status is a success when all values of the forming index time history are below one.

2. The method of claim 1, wherein the time-marching simulation includes simulating a punch being press into a die with the blank sheet metal in between.

3. The method of claim 1, wherein the formability index is a ratio of the obtained equivalent strain and the corresponding forming limit strain value.

4. The method of claim 1, wherein the instant flow direction is a function of major and minor strain of said shell elements at a particular instance of the metal forming process.

5. The method of claim 1, wherein the path-dependent FLD comprises a form limiting curve of major and minor strains for a material specimen under a linear load path.

6. The method of claim 5, wherein said converting the path-dependent FLD to the path-independent FLD further comprises using following equation:

$$\overline{\varepsilon}^{eq} = \frac{1+r}{\sqrt{1+2r}} \sqrt{\varepsilon_{major}^2 + \varepsilon_{minor}^2 + \frac{2r}{1+r} \varepsilon_{major}\varepsilon_{minor}}$$

where $\overline{\varepsilon}^{eq}$ is equivalent strain, $\varepsilon_{major}$ is major strain, $\varepsilon_{minor}$ is minor strain and r is Lankford parameter for Hill's yield surface in planar isotropic case.

7. The method of claim 5, wherein said converting the path-dependent FLD to the path-independent FLD further comprises using following equation:

$$\overline{\varepsilon}^{eq} = \left(\sigma_{11}\varepsilon_{11} + \sigma_{22}\varepsilon_{22} + \sigma_{33}\varepsilon_{33} + \sigma_{12}\varepsilon_{12} + \sigma_{13}\varepsilon_{13} + \sigma_{23}\varepsilon_{23}\right)/\overline{\sigma}_e$$

where $\overline{\varepsilon}^{eq}$ is equivalent strain, $\overline{\sigma}_e$ is effective stress, $\sigma_{ij}$, are stress components and $\varepsilon_{ij}$ are strain components for i, j=1,2,3 in a three-dimensional space.

8. The method of claim 1, wherein said each shell element is determined to be failed only when the formability index of all of the at least one integration point is equal to or greater than one.

9. A system for providing a numerical model of polymeric materials using in a computer aided analysis, the system comprising:

an input/output (I/O) interface;
a memory for storing computer readable code for an application module;
at least one processor coupled to the memory, said at least one processor executing the computer readable code in the memory to cause the application module to perform operations of:

defining a finite element analysis (FEA) model including a plurality of shell elements representing a blank sheet metal to be formed into a desired part;
converting a path-dependent forming limit diagram (FLD) for the blank sheet metal to a path-independent FLD;
obtaining said shell elements' equivalent strain and corresponding strain ratio by conducting the time-marching simulation, in the system, of entire sheet metal forming process of forming the blank sheet metal to the desired part;
compiling a forming index time history of said each shell element's integration point using the equivalent strain and corresponding forming limit strain value at instant deformation flow direction, wherein said each element contains at least one integration point; and
determining a status of the metal forming process, the status is a success when all values of the forming index time history are below one.

10. A computer readable medium containing computer executable instructions for predicting failure in a time-marching simulation of sheet metal forming process by a method according to claim 1.

FIG. 1
(Prior Art)

200

*FIG. 2*

**FIG. 3A**

**FIG. 3B**

FIG. 4A

**FIG. 4B**

500

502 ── Define FEA model for simulating sheet metal forming, the FEA model comprise a plurality of shell elements representing blank sheet metal to be formed to a particular product

504 ── Convert path-dependent FLD to path-independent FLD of material of the sheet metal

506 ── Conduct a time-marching simulation of sheet metal forming using the FEA model

508 ── Compile a formability index time history at all integration points of each element of the FEA model

510 ── Any formability index equal to or great than one ?

no → Success

yes → Failure

**FIG. 5**

EP 2 390 800 A1

600

Secondary Memory 610

Hard Disk Drive 612

Removable Storage Unit 618

Removable Storage Drive 614

Removable Storage Unit 622

Interface 620

Main Memory (RAM) 608

Module 606

Processor (s) 604

Bus 602

Communications Interface 624

I/O Interface 630

FIG. 6

**EP 2 390 800 A1**

**EUROPEAN SEARCH REPORT**

Application Number

EP 11 16 6530

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZENG D ET AL: "A path independent forming limit criterion for sheet metal forming simulations", SAE INTERNATIONAL JOURNAL OF MATERIALS AND MANUFACTURING APRIL 2009 SAE INTERNATIONAL USA, vol. 1, no. 1, April 2009 (2009-04), pages 809-817, XP009151375, DOI: DOI:10.4271/2008-01-1445 * the whole document * | 1-10 | INV. G06F17/50 |
| A | SAMUEL ET AL: "Numerical and experimental investigations of forming limit diagrams in metal sheets", JOURNAL OF MATERIALS PROCESSING TECHNOLOGY, ELSEVIER, NL, vol. 153-154, 10 November 2004 (2004-11-10), pages 424-431, XP005349206, ISSN: 0924-0136, DOI: 10.1016/J.JMATPROTEC.2004.04.095 * the whole document * | 1-10 | |
| | ----- | | TECHNICAL FIELDS SEARCHED (IPC) |
| A | US 2009/056468 A1 (KUBLI WALDEMAR [CH] ET AL) 5 March 2009 (2009-03-05) * the whole document * ----- | 1-10 | G06F |

The present search report has been drawn up for all claims

| Place of search | Date of completion of the search | Examiner |
|---|---|---|
| Munich | 19 August 2011 | Radev, Boyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**
EP 11 16 6530

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2011

| Patent document cited in search report | Publication date | Patent family member(s) | Publication date |
|---|---|---|---|
| US 2009056468 A1 | 05-03-2009 | EP 1983455 A2 | 22-10-2008 |

For more details about this annex : see Official Journal of the European Patent Office, No. 12/82